(19) Europäisches Patentamt
European Patent Office
Office européen des brevets

(11) **EP 4 173 989 A1**

(12) **EUROPEAN PATENT APPLICATION**
published in accordance with Art. 153(4) EPC

(43) Date of publication:
**03.05.2023 Bulletin 2023/18**

(21) Application number: **21831989.5**

(22) Date of filing: **14.06.2021**

(51) International Patent Classification (IPC):
**B65D 65/46** (2006.01)  **C08L 29/04** (2006.01)
**C08J 5/18** (2006.01)

(52) Cooperative Patent Classification (CPC):
**B65D 65/46; C08J 5/18; C08L 29/04**

(86) International application number:
**PCT/JP2021/022537**

(87) International publication number:
**WO 2022/004343 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 JP 2020111938**

(71) Applicant: **Kuraray Co., Ltd.**
**Kurashiki-shi, Okayama 710-0801 (JP)**

(72) Inventors:
• **OKAMOTO Minoru**
  **Kurashiki-shi, Okayama 710-0801 (JP)**
• **SHIMIZU Sayaka**
  **Kurashiki-shi, Okayama 713-8550 (JP)**
• **KAZETO Osamu**
  **Kurashiki-shi, Okayama 713-8550 (JP)**

(74) Representative: **D Young & Co LLP**
**120 Holborn**
**London EC1N 2DY (GB)**

(54) **WATER-SOLUBLE FILM AND PACKAGING**

(57)     [Problem to be solved] To provide a water-soluble film excellent in high-speed heat-sealing property while maintaining excellent solubility in water, and a package using the same.

[Solution] A water-soluble film of the present invention is a water-soluble film containing a polyvinyl alcohol resin, wherein after conditioning the water-soluble film at a temperature of 20°C and a relative humidity of 60% for 24 hours, a first melting temperature $Tm_1$ obtained from a melting curve when the temperature of the water-soluble film is raised to 200°C at 500°C/sec and a second melting temperature $Tm_2$ obtained from a melting curve when the temperature of the water-soluble film is cooled to 0°C at 100°C/sec after a temperature rise and the temperature of the water-soluble film is again raised to 200°C at 100°C/sec satisfy relationships of the following formulas (1) and (2).

$$105°C \leq Tm_1 \leq 165°C \ldots (1) \quad (1)$$

$$Tm_2 - Tm_1 \geq 20°C \ldots (2) \quad (2)$$

EP 4 173 989 A1

**Description**

## TECHNICAL FIELD

The present invention relates to a water-soluble film of a polyvinyl alcohol resin and a package using the same.

## RELATED ART

Conventionally, taking advantage of excellent solubility in water, water-soluble films have been used in a wide range of fields, including packaging of various chemicals, such as liquid detergents, pesticides and germicides, and seed tapes encapsulating seeds.

For water-soluble films to be used for such an application, polyvinyl alcohol resins (hereinafter, may be referred to as "PVA") are mainly used. Films with improved water solubility have been proposed by blending various additives such as a plasticizer or by using modified polyvinyl alcohol (for example, Patent Document 1).

## PRIOR ART DOCUMENT

## PATENT DOCUMENT

Patent Document 1: JP-A 2017-078166

## SUMMARY OF THE INVENTION

## PROBLEM TO BE SOLVED BY THE INVENTION

For a production of chemical package made of a water-soluble film, sealing by thermocompression-bonding (hereinafter, may be referred to as "heat-sealing") is sometimes used. Heat sealing is generally performed in a few seconds, but in recent years, in order to further improve production efficiency, chemical packages made of a water-soluble film have come to be manufactured by thermocompression-bonding a film at a high temperature at a high speed in a short time of one second or less. However, when the water-soluble film is heat-sealed at a high speed, if a sealed portion is not quickly melted, the sealing may be defective, causing problems such as leakage of contents of the chemical package. On the other hand, in order to improve heat-sealing property of the water-soluble film at high speed, if the water-soluble film is made easier to melt by, for example, adding a plasticizer to the film forming stock solution for the water-soluble film, adhesion of the melted film to a thermocompression-bonding mold portion may cause film defects in the chemical package. In addition, considering various uses such as chemical packages made of a water-soluble film, as a basic physical property required for a water-soluble film, it is necessary to have excellent solubility in water. Therefore, there has been a demand for a water-soluble film that has excellent solubility in water and an excellent high-speed heat-sealing property.

## MEANS FOR SOLVING THE PROBLEM

As described above, sealing of the water-soluble film by thermocompression-bonding is performed by pressing the film at high speed in a short time, so that PVA in the water-soluble film instantaneously repeats the process of crystallization and melting. Therefore, it is important to understand melting behavior of PVA crystals in the film in order to obtain a good high-speed heat-sealing property.

There is a method using a differential scanning calorimeter (hereinafter, may be referred to as "DSC") as a method for measuring a melting temperature and the like of polymer crystals in a film. When a water-soluble film containing the PVA is measured by this measurement method, by observing endothermic and exothermic peaks, it is possible to evaluate a temperature at which the PVA crystals begin to melt (melting temperature, hereinafter, may be referred to as "Tm") and an amount of heat generated during melting (melting heat amount, hereinafter sometimes referred to as "$\Delta H$").

However, in general DSC measurement, a temperature rising rate is limited to several degrees Celsius per second. At such a slow temperature rising rate, when a water-soluble film containing water-containing PVA is measured, water evaporation occurs prior to melting of the PVA during a temperature rise, resulting in recrystallization of the PVA. Therefore, it was not possible to grasp an original PVA crystal content and melting temperature of the film, and it was impossible to grasp behavior at a temperature rising rate at which the film melts instantaneously.

In recent years, it has become possible to perform analysis at a temperature rising rate of several hundred degrees Celsius per second using an ultrafast differential scanning calorimeter (hereinafter, may be referred to as "flash DSC"). By using this apparatus, it has become possible for the first time to understand the melting behavior of water-soluble films containing the PVA due to instantaneous heat, such as high-speed heat-sealing.

The inventors used this flash DSC to extensively study a relationship between analysis results of the water-soluble film under various measurement conditions and a heat-sealing property at high speed. As a result, the inventors have found that the heat-sealing property at high speed was improved by setting a melting temperature at a first heating and a difference between the melting temperature and a melting temperature at a second heating within a specific range when measuring repeatedly by heating and cooling. Furthermore, the present inventors have completed the present invention through repeated studies based on this knowledge.

That is, the present invention relates to [1] through [7] below.

[1] A water-soluble film containing a polyvinyl alcohol resin,

wherein after conditioning the water-soluble film at a temperature of 20°C and a relative humidity of 60% for 24 hours, a first melting temperature $Tm_1$ obtained from a melting curve when the temperature of the water-soluble film is raised to 200°C at 500°C/sec and a second melting temperature $Tm_2$ obtained from a melting curve when the temperature of the water-soluble film is cooled to 0°C at 100°C/sec after a temperature rise and the temperature of the water-soluble film is again raised to 200°C at 100°C/sec satisfy relationships of the following formulas (1) and (2).

$$105°C \leq Tm_1 \leq 165°C...(1)$$

$$Tm_2 - Tm_1 \geq 20°C...(2)$$

[2] The water-soluble film in the above-mentioned item [1], wherein the second melting temperature $Tm_2$ is 150°C or more and 180°C or less.

[3] The water-soluble film in the above-mentioned item [1] or [2], wherein a first heat of fusion $\Delta H_1$ obtained from the melting curve at a time of $Tm_1$ measurement is 2 J/g or more and 15 J/g or less.

[4] The water-soluble film in any one of the above-mentioned items [1] to [3], containing 10 parts by mass or more and 50 parts by mass or less of a plasticizer with respect to 100 parts by mass of the polyvinyl alcohol resin.

[5] A package in which the water-soluble film described in any one of the above mentioned items [1] to [4] stores a chemical.

[6] The package in the above-mentioned item [5], wherein the chemical is a pesticide, a detergent or a germicide.

[7] The package in the above-mentioned item [5] or [6], which is produced by heat-sealing.

## EFFECTS OF THE INVENTION

According to the present invention, it is possible to provide a water-soluble film having excellent solubility in water and an excellent high-speed heat-sealing property and a package using the same.

## BRIEF DESCRITION OF THE DRAWINGS

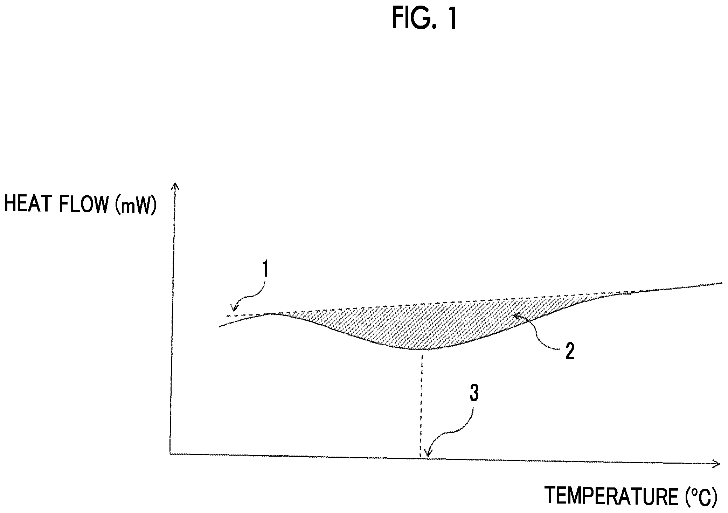

FIG. 1 is a schematic diagram of a melting curve of the water-soluble film of the present invention obtained by an ultrafast differential scanning calorimeter.

## MODE FOR CARRING OUT THE INVENTION

The present invention is specifically described below.

A water-soluble film of the present invention contains a polyvinyl alcohol resin, and after conditioning the water-soluble film at a temperature of 20°C and a relative humidity of 60% for 24 hours, a first melting temperature $Tm_1$ obtained from a melting curve when the temperature of the water-soluble film is raised to 200°C at 500°C/sec and a second melting temperature $Tm_2$ obtained from a melting curve when the temperature of the water-soluble film is cooled to 0°C at 100°C/sec after a temperature rise and the temperature of the water-soluble film is again raised to 200°C at 100°C/sec satisfy relationships of the following formulas (1) and (2).

$$105°C \leq Tm_1 \leq 165°C...(1)$$

EP 4 173 989 A1

$$Tm_2 - Tm_1 \geq 20°C \ldots (2)$$

The above temperature rising rate and cooling rate can be achieved by, for example, an ultrafast differential scanning calorimetry (flash DSC) apparatus. A schematic diagram of a melting curve obtained by flash DSC is shown in FIG. 1. An apex of a convex curve was defined as a melting temperature (Tm) of the film. Also, an area of a region surrounded by the melting curve and a baseline was defined as a heat of fusion of a measurement sample. The above baseline is a straight line that connects a heat flow values with tangential lines in the range between 100°C and 200°C.

The above apparatus employs a mechanism for directly contacting a sample with a sensor, and measurement is performed with a sample amount of several hundred ng level. Therefore, the sample and the sensor are excellent in heat conduction, enabling ultrafast temperature rise. For the sample piece used for measurement, the film thickness and section size were weighed, and the weight of the measurement sample was calculated from the unit weight. The size of the sample piece is preferably about 30 to 100 um for film thickness and about 50 to 100 um square for section size for ease of measurement. By dividing the heat of fusion of the measurement sample by the weight of the measurement sample, the heat of fusion, $\Delta H$ (J/g), can be obtained. The melting temperature (Tm) and the heat of fusion ($\Delta H$) can be obtained from the obtained melting curve by a conventionally known method, but usually Tm and $\Delta H$ are calculated by using analysis software attached to the apparatus.

In general, the melting temperature and the heat of fusion are affected by a temperature and a moisture content of the sample to be measured. Therefore, when measuring the melting temperature, the variation in the measurement results can be reduced by adjusting a condition of the measurement sample by leaving it under constant temperature and humidity conditions for a certain period of time. From the above viewpoints, in the present invention, before measuring the melting temperature, the sample to be measured is conditioned at a temperature of 20°C and a relative humidity of 60% for 24 hours, and then the melting temperature and the heat of fusion are measured under the above temperature rising and cooling conditions.

In the present invention, the melting temperature Tm obtained from the melting curve (hereinafter, may be referred to as "1st heating curve") when the temperature is raised to 200°C at 500°C/sec is defined as the first melting temperature $Tm_1$. The $Tm_1$ is 105°C or more and 165°C or less, preferably 110°C or more, and preferably 150°C or less. If the $Tm_1$ is less than the above range, the water-soluble film tends to melt at a low temperature, and the melted film adheres to a thermocompression-bonding mold portion during heat-sealing, which tends to cause film defects. On the other hand, if the $Tm_1$ exceeds the above range, the PVA crystals in the water-soluble film may not be melted when the water-soluble film is heat-sealed at high speed, resulting in insufficient sealing strength of the water-soluble film.

After raising the temperature to 200°C, it is preferable to hold the temperature at 200°C for several seconds. The holding time is not particularly limited, but it is generally preferred to hold from 0.05 seconds to 1 second, more preferably from 0.05 seconds to 0.5 seconds.

After the 1st heating, it is cooled to 0°C at 100°C/sec. After cooling to 0°C, it is preferable to hold the temperature at 0°C for several seconds. The holding time is not particularly limited, but it is generally preferred to hold from 0.05 seconds to 1 second, more preferably from 0.05 seconds to 0.5 seconds.

In the present invention, the melting temperature Tm obtained from the melting curve (hereinafter, may be referred to as "2nd heating curve") when the temperature is again raised to 200°C at 100°C/sec after the above cooling is defined as the second melting temperature $Tm_2$. In the present invention, the difference between $Tm_2$ and $Tm_1$ ($Tm_2-Tm_1$) is 20°C or more. When the $Tm_2-Tm_1$ is large, it is considered that a structural change of the PVA crystals in the water-soluble film during melting is large. Therefore, sufficient sealing strength can be obtained even when the water-soluble film is heat-sealed at high speed. The $Tm_2-Tm_1$ is preferably 30°C or more, more preferably 40°C or more. Although there is no particular upper limit for the $Tm_2-Tm_1$, it is usually 75°C, preferably 60°C.

The $Tm_2$ is preferably 150°C or more and 180°C or less. If the $Tm_2$ is less than 150°C, sealing strength may be insufficient, due to insufficient mechanical strength of the water-soluble film. On the other hand, when the $Tm_2$ exceeds 180°C, the solubility in water of the water-soluble film may be insufficient.

In the present invention, the heat of fusion $\Delta H$ determined from the 1st Heating curve obtained when measuring the $Tm_1$ is defined as a first heat of fusion $\Delta H_1$. The $\Delta H_1$ is preferably 2 J/g or more and 15 J/g or less. If the $\Delta H_1$ is less than the above range, the melted film would adhere to the thermocompression-bonding mold portion during heat-sealing of the water-soluble film, which may cause film defects. On the other hand, if the $\Delta H_1$ exceeds the above range, the amount of heat would be insufficient when the water-soluble film is heat-sealed at high speed, and the PVA crystals in the water-soluble film will not melt, resulting in poor sealing.

In the present invention, the heat of fusion $\Delta H$ determined from the second heating curve obtained when measuring the $Tm_2$ is defined as the second heat of fusion $\Delta H_2$. The $\Delta H_2$ is preferably 2 J/g or more and 20 J/g or less. If the $\Delta H_2$ is less than the above range, sealing failure may occur and the contents may leak from the package of the water-soluble film. On the other hand, if the $\Delta H_2$ exceeds the above range, a water solubility of a sealed portion of the package of the water-soluble film may be insufficient, resulting in undissolved portions.

In the present invention, it is important to control the parameters such as $Tm_1$ and $Tm_2$ as described above within the above ranges. Methods for controlling the above parameters include, for example, a method of adjusting a type of PVA (degree of saponification, degree of modification, unmodified PVA/modified PVA blend ratio, etc.), a method of adjusting the type and amount of plasticizer added, a method of adjusting film production conditions (surface temperature of a support, heat treatment conditions, etc.), or a method of adjusting by a combination of the above methods.

<Polyvinyl alcohol based resin>

As the PVA contained in the water-soluble film of the present invention, a polymer produced by saponifying a vinyl ester polymer obtained by polymerizing a vinyl ester monomer can be used.

Examples of vinyl ester monomers include vinyl formate, vinyl acetate, vinyl propionate, vinyl valerate, vinyl laurate, vinyl stearate, vinyl benzoate, vinyl pivalate, and vinyl versatate, and the like. Among them, vinyl acetate is preferable as the vinyl ester monomer.

The vinyl ester polymer is not particularly limited, but a polymer obtained by using only one or two or more kinds of vinyl ester monomers as a monomer is preferable, and a polymer obtained by using only one kind of vinyl ester monomer as a monomer is more preferable. In this regard, the vinyl ester polymer may be a copolymer of one or two or more kinds of vinyl ester monomer and other monomer copolymerizable therewith.

Examples of the other monomer include, for example, ethylene; olefins having a carbon number from 3 to 30, such as propylene, 1-butene, and isobutene; acrylic acid and salts thereof; acrylic esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamidopropanesulfonic acid and salts thereof, acrylamide propyldimethylamine and salts thereof, and N-methylolacrylamide and derivatives thereof; methacrylamide derivatives, such as methacrylamide, N-methylmethacrylamide, N-ethylmethacrylamide, methacrylamidopropanesulfonic acid and salts thereof, methacrylamide propyldimethylamine and salts thereof, and N-methylolmethacrylamide and derivatives thereof; N-vinylamides, such as N-vinylformamide, N-vinylacetamide, and N-vinylpyrrolidone; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides, such as acrylonitrile and methacrylonitrile; vinyl halides, such as vinyl chloride, vinylidene chloride, vinyl fluoride, and vinylidene fluoride; allyl compounds, such as allyl acetate and allyl chloride; maleic acid and salts, esters, and acid anhydrides thereof; itaconic acid and salts, esters, and acid anhydrides thereof; vinylsilyl compounds, such as vinyltrimethoxysilane; isopropenyl acetate; and the like.

The vinyl ester polymer may have a structural unit derived from one or two or more kinds of the other monomer above.

From the viewpoint of controlling the parameters such as $Tm_1$ and $Tm_2$ within the above ranges and improving both the heat-sealing property and the mechanical strength of the water-soluble film, the ratio of structural units derived from other monomers in the vinyl ester polymer (hereinafter, may be referred to as "degree of modification") is preferably 15 mol % or less, more preferably 5 mol % or less, based on the number of moles of all structural units constituting the vinyl ester based polymer.

Although degree of polymerization of the PVA is not particularly limited, the following range is preferable. That is, the degree of polymerization is preferably 200 or more, more preferably 300 or more, and even more preferably 500 or more, from the viewpoint of maintaining sufficient mechanical strength of the water-soluble film. On the other hand, the degree of polymerization is preferably 8,000 or less, more preferably 5,000 or less, and even more preferably 3,000 or less, from the viewpoint of enhancing PVA productivity, water-soluble film productivity, and the like.

Here, the degree of polymerization means the average degree of polymerization measured in accordance with the description of JIS K 6726-1994. In this specification, the degree of polymerization is determined by the following formula from the intrinsic viscosity $[\eta]$ (unit: deciliter/g) measured in water at 30°C after resaponification of residual acetic acid groups of the PVA and purification thereof.

$$\text{Degree of polymerization } P_o = ([\eta] \times 10^4 / 8.29)^{(1/0.62)}$$

In the present invention, a value obtained by subtracting the degree of modification from the degree of saponification of the PVA is preferably 64 to 97 mol%. By adjusting the value within such ranges, the parameters such as $Tm_1$ and $Tm_2$ can be controlled within the above ranges, and both the heat-sealing property and the mechanical strength of the water-soluble film can be achieved. The value is more preferably 70 mol% or more, and even more preferably 75 mol% or more. On the other hand, the value is more preferably 93 mol% or less, even more preferably 91 mol% or less, and particularly preferably 90 mol% or less.

In this context, the degree of saponification of the PVA means a ratio (mol%) indicating the number of moles of the vinyl alcohol units based on the total number of moles of the structural units (typically, vinyl ester monomer units) that may be converted to vinyl alcohol units by saponification and the vinyl alcohol units in the PVA.

The degree of saponification of the PVA can be measured in accordance with the description of JIS K6726-1994.

The water-soluble film may contain one type of PVA singly, or may contain two or more types of PVA having different degrees of polymerization, saponification, modification, and the like.

A content of the PVA in the water-soluble film is preferably 100% by mass or less. On the other hand, the content of the PVA is preferably 50% by mass or more, more preferably 80% by mass or more, and even more preferably 85% by mass or more.

<Plasticizer>

The water-soluble film preferably contains a plasticizer. By including the plasticizer, the water-soluble film can be given flexibility equivalent to that of other plastic films. For this reason, the water-soluble film has good mechanical strength such as impact strength, processability during secondary processing, and the like.

Examples of plasticizers include polyhydric alcohols such as ethylene glycol, glycerin, diglycerin, propylene glycol, diethylene glycol, triethylene glycol, tetraethylene glycol, trimethylolpropane, sorbitol, and the like. These plasticizers may be used alone or in combination of two or more. Among these, the plasticizer is preferably ethylene glycol or glycerin, more preferably glycerin, from the viewpoint of suppressing bleeding out to the surface of the water-soluble film.

A content of the plasticizer in the water-soluble film is preferably 10 parts by mass or more, more preferably 15 parts by mass or more with respect to 100 parts by mass of the PVA. On the other hand, the content of the plasticizer is preferably 50 parts by mass or less, more preferably 40 parts by mass or less with respect to 100 parts by mass of the PVA. When the content of the plasticizer is within the above range, the parameters such as $Tm_1$ and $Tm_2$ can be easily controlled within the above range. In addition, it is possible to preferably prevent or suppress problems such as deterioration of handleability due to excessive flexibility of the water-soluble film and bleeding out to the surface.

<Starch/water-soluble polymer>

The water-soluble film may contain starch and/or water-soluble polymers other than the PVA. By containing the starch and/or the water-soluble polymer other than the PVA, it is possible to increase the mechanical strength of the water-soluble film, maintain moisture resistance of the water-soluble film during handling, or adjust a softening speed of the PVA film by absorbing water, and the like.

Examples of the starch include natural starches, such as corn starch, potato starch, sweet potato starch, wheat starch, rice starch, tapioca starch, and sago starch; processed starches subjected to etherification, esterification, oxidation, and the like; and the like, and processed starches are particularly preferable.

The content of starch in the water-soluble film is preferably 15 parts by mass or less, and more preferably 10 parts by mass or less with respect to 100 parts by mass of the PVA. When the content of the starch is within the above range, deterioration of a processability of the water-soluble film can be prevented or suppressed.

Examples of the water-soluble polymers other than the PVA include dextrin, gelatin, glue, casein, shellac, gum arabic, polyacrylic acid amide, sodium polyacrylate, polyvinyl methyl ether, copolymers of methyl vinyl ether and maleic anhydride, Copolymers of vinyl acetate and itaconic acid, polyvinylpyrrolidone, cellulose, acetylcellulose, acetylbutylcellulose, carboxymethylcellulose, methylcellulose, ethylcellulose, hydroxyethylcellulose, sodium alginate, and the like.

The content of the water-soluble polymer other than the PVA in the water-soluble film is preferably 15 parts by mass or less, and more preferably 10 parts by mass or less with respect to 100 parts by mass of the PVA. When the content of the water-soluble polymer other than the PVA is within the above range, the water solubility of the water-soluble film can be sufficiently enhanced.

<Surfactant>

The water-soluble film preferably contains a surfactant. By including the surfactant, it is possible to improve the handleability of the water-soluble film and the peelability of the water-soluble film from a film forming apparatus during production.

The surfactant is not particularly limited, and for example, an anionic surfactant, a nonionic surfactant, or the like can be used.

Examples of the anionic surfactants include carboxylic acid type surfactants such as potassium laurate; sulfate type surfactants such as octyl sulfate; and sulfonic acid type surfactants such as dodecylbenzenesulfonate.

Examples of the nonionic surfactants include alkyl ether surfactants such as polyoxyethylene lauryl ether and polyoxyethylene oleyl ether; alkylphenyl ether surfactants such as polyoxyethylene octylphenyl ether; alkyl ester type surfactants such as polyoxyethylene laurate; alkyl amine type surfactants such as polyoxyethylene lauryl amino ether; alkyl amide type surfactants such as polyoxyethylene lauric acid amide; polypropylene glycol ether type surfactants such as polyoxyethylene polyoxypropylene ether; alkanolamide-type surfactants such as lauric acid diethanolamide and oleic acid diethanolamide; and allyl phenyl ether type surfactants such as polyoxyalkylene allyl phenyl ether, and the like.

Such surfactants may be used singly or in combination of two or more. Among the above-mentioned surfactants, due to an excellent effect of reducing surface abnormalities such as streak defects during the production of the water-soluble film, the nonionic surfactants are preferred as the surfactant, alkanolamide-type surfactants are more preferred, and dialkanolamides (e.g., diethanolamide, etc.) of aliphatic carboxylic acids (e.g., saturated or unsaturated aliphatic carboxylic acids having 8 to 30 carbon atoms, etc.) are even more preferred.

A content of the surfactant in the water-soluble film is preferably 0.01 parts by mass or more, more preferably 0.02 parts by mass or more, and even more preferably 0.05 parts by mass or more with respect to 100 parts by mass of the PVA. On the other hand, the content of the surfactant is preferably 10 parts by mass or less, more preferably 1 part by mass or less, even more preferably 0.5 parts by mass or less, and particularly preferably 0.3 parts by mass or less with respect to 100 parts by mass of the PVA. When the content of the surfactant is within the above range, the peelability of the water-soluble film from a film-forming apparatus during production is improved, and problems such as blocking between water-soluble films are less likely to occur. In addition, problems such as bleeding out of the surfactant to the surface of the water-soluble film and deterioration of the appearance of the water-soluble film due to aggregation of the surfactant are less likely to occur.

<Other components>

The water-soluble film may contain components such as moisture, antioxidants, UV absorbers, lubricants, cross-linking agents, coloring agents, fillers, preservatives, antifungal agents, and other polymer compounds other than the plasticizer, the starch, the water-soluble polymer other than the PVA, and the surfactant, as long as they do not interfere with the effects of the present invention.

A ratio of the total weight of the PVA, plasticizer, starch, water-soluble polymer other than PVA, and surfactant to the total weight of the PVA film is not particularly limited, but is preferably 60 to 100% by mass, more preferably 80 to 100% by mass, and even more preferably 90 to 100% by mass.

<Water-soluble film>

A complete dissolution time of the water-soluble film of the present invention when immersed in deionized water at 10°C is not particularly limited, but is preferably within the following range. That is, the complete dissolution time is preferably 150 seconds or less, more preferably 60 seconds or less, even more preferably 45 seconds or less, and particularly preferably 35 seconds or less. The water-soluble film whose the complete dissolution time is within the above range completes dissolution relatively quickly, and therefore can be suitably used as a film for packaging (packaging material) for chemicals and the like. On the other hand, the complete dissolution time is preferably 5 seconds or more, more preferably 10 seconds or more, even more preferably 15 seconds or more, and particularly preferably 20 seconds or more. With such a water-soluble film whose complete dissolution time is not too short, problems such as occurrence of blocking between the water-soluble films due to absorption of moisture in the atmosphere and deterioration of the mechanical strength of the water-soluble film itself are less likely to occur.

The complete dissolution time when the water-soluble film is immersed in deionized water at 10°C can be measured as follows.

<1> The water-soluble film is placed in a thermo-hygrostat adjusted to a temperature of 20°C and a relative humidity of 65% for 16 hours or more to condition the humidity.

<2> After cutting out a rectangular sample of length 40 mm × width 35 mm from the humidity-conditioned water-soluble film, the sample is sandwiched and fixed between two plastic plates of 50 mm × 50 mm with rectangular windows (holes) of 35mm length × 23mm width so that the longitudinal direction of the sample is parallel to the longitudinal direction of the window and the window is positioned substantially at the center of the sample in the width direction.

<3> 300 mL of deionized water is poured into a 500 mL beaker and adjust the water temperature to 10°C while stirring with a magnetic stirrer equipped with a 3 cm long bar at 280 rpm.

<4> The sample fixed to the plastic plate in <2> above is completely immersed in the deionized water in the beaker while being careful not to let it come into contact with the bar of the magnetic stirrer.

<5> The time from immersion in the deionized water until sample pieces dispersed in the deionized water completely disappear visually is measured.

Although the thickness of the water-soluble film is not particularly limited, the following range is preferable. That is, the thickness is preferably 200 μm or less, more preferably 150 μm or less, even more preferably 100 μm or less, and particularly preferably 50 μm or less. On the other hand, the thickness is preferably 5 μm or more, more preferably 10 μm or more, even more preferably 15 μm or more, and particularly preferably 20 μm or more. Since the thickness within the above range is not too large, it is possible to suitably prevent deterioration of the secondary workability of the PVA film. On the other hand, since the thickness in the above range is not too small, the water-soluble film can maintain sufficient mechanical strength.

The thickness of the water-soluble film can be obtained by measuring the thickness at 10 arbitrary points (for example, 10 arbitrary points on a straight line drawn in the length direction of the water-soluble film) and calculating the average value of the measured thicknesses thereof.

<Method for producing water-soluble film>

The method for producing the water-soluble film of the present invention is not particularly limited, but, for example, any method such as the following can be used.

The method for producing the water-soluble film may be an arbitrary method, such as a film formation method where a solvent, additives, and the like are added to the PVA and homogenized to obtain a film forming stock solution to be used in casting film formation, wet film formation (discharge into a poor solvent), dry/wet film formation, gel film formation (a method of extracting and removing the solvent after once cooling and gelling the film forming stock solution), and combination thereof, melt extrusion film formation where the above film forming stock solution thus obtained is extruded from a T die or the like using an extruder or the like, inflation molding, and the like. Among the methods described above, the casting film-forming method and the melt extrusion film-forming method are preferable. The homogeneous water-soluble film can be obtained with good productivity by using the casting film-forming method and the melt extrusion film-forming method.

Below, the method of producing the water-soluble film using the casting film-forming method or the melt extrusion film-forming method will be described.

First, a film forming stock solution containing the PVA, the solvent, and optionally additives such as the plasticizer and the surfactant are prepared. When the film forming stock solution contains the additive, the ratio of the additive to the PVA in the film forming stock solution is substantially equal to the ratio of the additive to the PVA in the obtained water-soluble film described above.

Next, the film forming stock solution is poured (supplied) in the form of a film onto a rotating support such as a metal roll or metal belt. As a result, a liquid coating of the film forming stock solution is formed on the support. The liquid coating is solidified into a film by heating on the support to remove the solvent.

The solidified long film is peeled off from the support, dried with a drying roll, a drying furnace, etc., if necessary, further heat-treated, and wound into a roll.

In the drying process (solvent removal process) of the liquid coating poured onto the support and the subsequent drying process of the water-soluble film, the crystallization of the PVA progresses during heating. In particular, when the PVA is heated in a region with a high moisture content, the mobility of its molecular chains increases, so that crystallization proceeds easily. Therefore, degree of crystallization of the PVA can be controlled by a drying rate in the drying process. For example, when a drying speed is increased, crystal growth tends to be inhibited, resulting in a smaller crystal size and a higher melting temperature. On the other hand, when the drying rate is slowed down, crystal growth tends to be promoted, resulting in a larger crystal size and a lower melting temperature. Further, when the amount of heat applied is increased, the degree of crystallinity increases and the amount of heat of fusion tends to increase.

The drying rate can be adjusted by adjusting the temperature of the support, the contact time with the support, the temperature and amount of hot air, the temperature of the drying roll and the drying oven, and the like.

A volatile content ratio of the film forming stock solution (concentration of volatile components such as solvents removed by volatilization or evaporation during film formation) is not particularly limited, but is preferably 50 to 90% by mass, and more preferably 55 to 80% by mass. When the volatile content ratio is within the above range, the viscosity of the film forming solution can be adjusted to a suitable range, so that the film-forming property of the water-soluble film (liquid coating) is improved, and it becomes easier to obtain the water-soluble film having a uniform thickness.

As used herein, the term "volatile content ratio of the film forming stock solution" refers to a value obtained by the following formula.

```
    Volatile content ratio (% by mass) of film forming stock
solution = {(Wa-Wb)/Wa}×100
```

In the formula, Wa represents the mass (g) of the film forming stock solution, and Wb represents the mass (g) after drying the film forming stock solution of Wa (g) in an electric heat dryer at 105°C for 16 hours.

Examples of the method of preparing the film forming stock solution include, but not particularly limited to, a method where the PVA and the additives such as a plasticizer, a surfactant and the like are dissolved in a dissolution tank or the like, a method where the PVA in a hydrated state is melt kneaded together with the additives such as a plasticizer, a surfactant and the like using a single-screw extruder or twinscrew extruder, and the like.

A surface temperature of the support onto which the film forming stock solution is poured is not particularly limited, but is preferably 50 to 110°C, more preferably 60 to 100°C, and even more preferably 65 to 95°C. When the surface temperature is within the above range, by drying the liquid coating at an appropriate speed, the time required for drying the liquid coating does not become too long and the productivity of the water-soluble film does not decrease. In addition, by drying the liquid coating at an appropriate speed, the surface of the water-soluble film does not easily develop an abnormality such as foaming.

At the same time as heating the liquid coating on the support, hot air may be uniformly blown to the entire non-contact surface side of the liquid coating at a wind speed of 1 to 10 m/sec. Thereby, the drying speed of the liquid coating can be adjusted. The temperature of the hot air blown to the non-contact surface side is not particularly limited, but is preferably 50 to 150°C, more preferably 70 to 120°C. When the temperature of the hot air is within the above range, the efficiency of drying the liquid coating, the uniformity of drying, etc. can be further enhanced.

When a supply speed (discharge speed) of the film forming stock solution onto the support is defined as S0 [m/min], and a rotation speed (peripheral speed) of the support is defined as S1 [m/min], the ratio (S1/S0) of the rotation speed (peripheral speed) S1 of the support to the supply speed (discharge speed) S0 of the film forming stock solution onto the support is preferably within the following range. That is, the (S1/S0) is not particularly limited, but is preferably 7 or less, more preferably 6.8 or less, and even more preferably 6.5 or less. On the other hand, the (S1/S0) is not particularly limited, but preferably exceeds 3, more preferably exceeds 5, further preferably exceeds 5.2, and particularly preferably exceeds 5.5. When the (S1/S0) is within the above range, crystallization due to the orientation of the molecular chains of the PVA in the liquid coating proceeds appropriately, making it easy to adjust the $Tm_2$-$Tm_1$ to an appropriate range. In addition, since deformation of the liquid coating due to gravity can be suppressed between a die lip and the support, problems such as uneven thickness of the PVA film are less likely to occur.

The supply speed (S0) of the film forming stock solution means a linear velocity in the flow direction of the film forming stock solution. Specifically, the supply speed (S0) of the film forming stock solution can be determined by dividing a volume per unit time of the film forming stock solution supplied (discharged) from a film-forming discharge device by an opening area of a slit portion of the film-forming discharge device (product of a slit width of the film-forming discharge device and an average value of the slit opening). The rotation speed (S1) of the support is preferably 5 to 30 m/min from the viewpoint of uniformity of drying, drying speed and productivity of PVA film.

The water-soluble film is preferably dried (solvent removal) on the support to the volatile content ratio of 5 to 50 mass %, then peeled off from the support and further dried as necessary.

The drying method is not particularly limited, and includes a method of passing through a drying oven and a method of contacting with a drying roll.

When drying the water-soluble film using a plurality of drying rolls, it is preferable to bring one side and the other side of the water-soluble film into contact with the drying rolls alternately. As a result, the degree of crystallinity of the PVA can be made uniform on both sides of the water-soluble film. In this case, the number of drying rolls is not particularly limited, but is preferably 3 or more, more preferably 4 or more, and even more preferably 5 to 30.

The temperature of the drying oven or drying rolls is preferably 40 to 110°C. The temperature of the drying oven or the drying rolls is more preferably 100°C or less, even more preferably 90°C or less, and particularly preferably 85°C or less. On the other hand, the temperature of the drying oven or the drying rolls is more preferably 45°C or more, and even more preferably 50°C or more.

The water-soluble film after drying can be further heat-treated as necessary. By performing heat treatment, parameters such as the $Tm_1$ and the $Tm_2$ can be controlled within the above ranges, and properties such as mechanical strength, water solubility and birefringence of the water-soluble film can be adjusted. The heat treatment temperature is preferably 60 to 135°C. The heat treatment temperature is more preferably 130°C or less.

In order to make the surface of the water-soluble film have a desired surface roughness, it is possible to employ a method of forming unevenness on the surface of the support to obtain the water-soluble film having an uneven shape during film formation, and a method of applying an uneven shape to the water-soluble film by embossing. For example, by forming recesses having an average depth of 1.8 um or less and a maximum depth of 20 um or more and 50 um or less on the surface of the support in contact with the surface of the water-soluble film to be the gloss surface, the water-soluble film having the desired surface roughness can be obtained.

When the water-soluble film having the uneven surface is obtained by forming the uneven surface on the support, the drying temperature of the film is preferably 50 to 170°C, more preferably 60 to 140°C. The drying time on the support is preferably 0.5 to 20 minutes, more preferably 1 to 15 minutes.

When the water-soluble film is embossed to form an uneven shape, the processing temperature is preferably 60 to 150°C, more preferably 80 to 140°C. The processing pressure is preferably 0.1 to 15 MPa, more preferably 0.3 to 8 MPa. A film conveying speed for embossing is preferably 5 m/min or more, more preferably 10 to 30 m/min.

The water-soluble film produced in this manner is further wound on a cylindrical core into a roll and moistureproof packaged to form a product after applying humidity control treatment and cutting of both ends (edges) of the film, if necessary.

<Application>

The water-soluble film of the present invention can be more suitably used in various film applications to which general water-soluble films are applied.

Examples of the above-mentioned film applications include chemical packaging films, liquid pressure transfer base films, embroidery base films, release films for forming artificial marble, seed packaging films, waste storage bag films, and the like. Among the films described above, the water-soluble film of the present invention is preferably applied to a chemical packaging film because the effects of the present invention can be obtained more remarkably.

When the water-soluble film of the present invention is applied to the chemical packaging film, the types of chemicals include, for example, pesticides, detergents (including bleaching agents), disinfectants, and the like.

The physical properties of the chemical are not particularly limited, and may be acidic, neutral, or alkaline.

In addition, the chemical may contain a boron-containing compound or a halogen-containing compound.

The chemical may be in the form of powder, mass, gel or liquid, but liquid is preferred.

The form of packaging is also not particularly limited, and from the view point of handling, the form of unit packaging (preferably sealed packaging) in which the chemical is packaged by unit amount is preferred.

The package of the present invention is obtained by applying the water-soluble film of the present invention to the chemical packaging film to package the chemical. In other words, the package of the present invention includes a packaging material (capsule) composed of the water-soluble film of the present invention and the chemical enclosed in the packaging material.

By bonding matte surfaces of the water-soluble films of the present invention to each other and manufacturing a package so that the gloss surface is on the front side, the package having excellent surface gloss and excellent blocking resistance can be obtained.

A method for laminating the films is not particularly limited, and known methods can be employed and examples thereof include heat-sealing, water sealing, glue sealing, etc. Heat sealing or water sealing is preferred. Among others, the water-soluble film of the present invention is preferably used for heat-sealing.

## EXAMPLES

Hereinafter, the present invention will be specifically described below with reference to examples and the like, but the present invention is not limited by the following examples. Evaluation items and evaluation methods adopted in the following examples and comparative examples are as follows.

(1) Flash DSC measurement

The water-soluble film was conditioned at a temperature of 20°C and a relative humidity of 65% for 24 hours. Subsequently, the film was cut into a size of 50 um $\times$ 50 um to obtain a measurement sample, and then the DSC measurement was performed by setting the measurement sample on a measurement cell so that a film thickness direction was parallel to a cell surface. In the measurement, a unit volume weight of the film was measured in advance, and a weight of the measurement sample was determined from a film thickness and size of the measurement sample.

Measuring device: Flash DSC 1 STAR System (manufactured by Metler Toled)
Analysis software: STAR Software (manufactured by Metler Toled)
1st Heating: From 0°C to 200°C, Temperature rising rate: 500°C/s (Isothermal hold for 0.1s after reaching 200°C)
1st Cooling: From 200°C to 0°C, Cooling rate: 100°C/s (Isothermal hold for 0.1s after reaching 0°C)
2nd Heating: From 0°C to 200°C, Heating rate: 100°C/s
Measurement cell: chip sensor dedicated to the device (manufactured by Metler Toled)

The obtained melting curves were analyzed to calculate $Tm_1$, $Tm_2$, $\Delta H_1$ and $\Delta H_2$.

(2) Sealing strength

The water-soluble film was conditioned at a temperature of 20°C and a relative humidity of 65% for 24 hours. Subsequently, the film was cut into a size of 15 mm in width × 200 mm. An obtained film piece was folded in half in a longitudinal direction, and a portion 10 mm from a fold was heat-sealed with an impulse-type desktop hand sealer "P-300" manufactured by Fuji Impulse Co., Ltd. to prepare a measurement sample. The sealing time was set at 0.5 seconds or 0.8 seconds.

The obtained measurement sample was pulled with an autograph at a scanning speed of 300 mm/min and a distance between chucks of 50 mm to determine a maximum test force (N/15 mm) at the time of breakage and peeling. The above procedure was repeated 5 times or more, and the sealing strength was obtained by averaging 3 or more points excluding the maximum and minimum values.

(3) Complete dissolution time of film

The complete dissolution time of the water-soluble film in deionized water at 10°C was determined by the method described above.

<Example 1>

First, 100 parts by mass of PVA (degree of saponification: 88 mol%, viscosity average polymerization degree: 1700) obtained by saponifying polyvinyl acetate, 10 parts by mass of glycerin as a plasticizer, 0.1 parts by mass of lauric acid diethanolamide as a surfactant and water were blended to prepare a film forming stock solution. The volatile content ratio of the film forming stock solution was 68% by mass.

Next, the film forming stock solution was discharged in the form of a film from a T-die onto a metal roll (surface temperature of 80°C) as a support to form a liquid coating on the metal roll. On the metal roll, hot air of 85°C was blown at a speed of 5 m/sec to dry an entire non-contact surface of the liquid coating with the metal roll. A PVA film was thus obtained. The peripheral speed (S1) of the metal roll was 5.6 m/min, and the ratio (S1/S0) of the peripheral speed (S1) of the metal roll to the discharge speed (S0) of the film forming stock solution onto the metal roll was 4.8.

Next, the PVA film was peeled off from the metal roll, dried by alternately contacting one side and the other side of the PVA film with each drying roll, and then wound into a roll on a cylindrical core. The surface temperature of each drying roll was set to 75°C. The obtained water-soluble film had a thickness of 35 um and a length of 1200 m.

As a result of performing flash DSC measurement of the obtained film, $Tm_1$ was 144°C, $Tm_2$ was 189°C, $\Delta H_1$ was 10.2 J/g, $\Delta H_2$ was 15.6 J/g, and $Tm_2-Tm_1$ was 45°C.

In addition, as a result of measuring the sealing strength using the obtained film, the sealing strength was 5.3 N/m$^2$ when the sealing time was 0.5 seconds and 5.4 N/m$^2$ when the sealing time was 0.8 seconds, and sufficient sealing strength was obtained even if the sealing time was short.

Furthermore, when the complete dissolution time of the obtained film was measured, the complete dissolution time was 45 seconds.

<Comparative Example 1>

A water-soluble film was obtained in the same manner as in Example 1, except that the amount of glycerin used in preparing the film forming stock solution was changed to 3 parts by mass.

<Examples 2 and 3>

Water-soluble films were obtained in the same manner as in Example 1, except that half the amount of glycerin and polyethylene glycol were used instead of glycerin as the plasticizer used for preparing the film forming stock solution, and the blending amount of the plasticizer was changed to 20 parts by mass and 40 parts by mass, respectively.

<Examples 4 and 5>

Water-soluble films were obtained in the same manner as in Example 2, except that the surface temperatures of the metal rolls for discharging the film forming stock solution were changed to 75°C and 90°C, respectively.

<Example 6>

A water-soluble film was obtained in the same manner as in Example 2, except that the temperature of the hot air blown on the metal roll to dry the liquid coating was changed to 90°C.

<Comparative Example 2>

A water-soluble film was obtained in the same manner as in Example 1, except that half the amount of glycerin and polyethylene glycol were used instead of glycerin as the plasticizer used for preparing the film forming stock solution, and the amount of the plasticizer was changed to 60 parts by mass.

<Comparative Example 3>

A water-soluble film was obtained in the same manner as in Example 2, except that S1 was changed to 28 m/min and (S1/S0) was changed to 48 when the film forming stock solution was discharged.

<Comparative Example 4>

A water-soluble film was obtained in the same manner as in Example 2, except that the dried water-soluble film was further heat-treated at 140°C.

<Example 7>

A water-soluble film was obtained in the same manner as in Example 3, except that the PVA used for preparing the film forming stock solution was changed to maleic acid monomethyl ester (MMM)-modified PVA (degree of saponification 90 mol%, degree of polymerization 1700, degree of MMM modification 5 mol%).
In this regard, in Table 1, the maleic acid monomethyl ester-modified PVA is abbreviated as "MMMΔ5".

<Example 8>

A water-soluble film was obtained in the same manner as in Example 2, except that the PVA used for preparing the film forming stock solution was changed to sodium acrylamide-2-methylpropanesulfonate (AMPS)-modified PVA (degree of saponification 88 mol%, degree of polymerization 1700, degree of AMPS modification 2 mol%) and the blending amount of the plasticizer was set to 25 parts by mass.
In this regard, in Table 1, sodium acrylamide-2-methylpropanesulfonate-modified PVA is abbreviated as "AMPSΔ2".

<Comparative Example 5>

A water-soluble film was obtained in the same manner as in Example 1, except that the PVA used for preparing the film forming stock solution was changed to completely saponified PVA (degree of saponification 99 mol%, degree of polymerization 1700).
The evaluation results of the films thus obtained are shown in Table 1.

[TABLE 1]

Table 1

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|
| Modification | No modification | No modification | No modification' | No modification | No modification | No modification | MMMΔ5 | AMPSΔ2 | No modification | No modification | No modification' | No modification | No modification |
| Degree of saponification [mol%] | 88 | 88 | 88 | 88 | 88 | 88 | 90 | 88 | 88 | 88 | 88 | 88 | 99 |
| Plasticizer [parts by mass]* | 10 | 20 | 40 | 20 | 20 | 20 | 40 | 25 | 3 | 60 | 20 | 20 | 10 |
| Temperature of support (metal roll) [°C] | 80 | 80 | 80 | 75 | 90 | 80 | 80 | 80 | 80 | 80 | 80 | 80 | 80 |
| S1/S0 | 4.8 | 4.8 | 4.8 | 4.8 | 4.8 | 4.8 | 4.8 | 4.8 | 4.8 | 4.8 | 48 | 4.8 | 4.8 |
| Temperature of hot air [°C] | 85 | 85 | 85 | 85 | 85 | 90 | 85 | 85 | 85 | 85 | 85 | 85 | 85 |
| Heat treatment temperature [°C] | - | - | - | - | - | - | - | - | - | - | - | 140 | - |
| $Tm_1$ [°C] | 144 | 133 | 120 | 125 | 153 | 146 | 113 | 116 | 170 | 102 | 162 | 165 | 209 |
| $Tm_2$ [°C] | 189 | 177 | 160 | 176 | 177 | 178 | 160 | 166 | 194 | 144 | 176 | 179 | 220 |
| $Tm_2 - Tm_1$ [°C] | 45 | 44 | 40 | 51 | 24 | 32 | 47 | 50 | 24 | 42 | 14 | 14 | 11 |
| $\Delta H_1$ [J/g] | 10.2 | 10.2 | 13.2 | 9.9 | 11.3 | 11.0 | 5.8 | 5.1 | 11.3 | 7.5 | 16.2 | 14.5 | 5.0 |
| $\Delta H_2$ [J/g] | 15.6 | 15.9 | 14.2 | 14.9 | 15.9 | 15.3 | 3.9 | 4.4 | 16.1 | 14.1 | 15.8 | 15.8 | 8.2 |

13

EP 4 173 989 A1

(continued)

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|
| Sealing strength [N/15 mm] | | | | | | | | | | | | | |
| Sealing time: 0.5 seconds | 5.3 | 5.5 | 6.0 | 5.9 | 4.7 | 5.5 | 3.5 | 3.8 | Impossible to seal | 1.9 | 2.7 | 2.5 | Impossible to seal |
| Sealing time: 0.8 seconds | 5.4 | 5.5 | 5.9 | 5.8 | 6.0 | 6.4 | 3.6 | 3.8 | 7.2 | 2.0 | 5.8 | 6.0 | Impossilbe to seal |
| Difference | -0.1 | 0 | 0.1 | 0.1 | -1.3 | -0.9 | -0.1 | 0 | - | -0.1 | -3.1 | -3.5 | - |
| Complete dissolution time at 10°C | 45 | 43 | 35 | 39 | 52 | 49 | 21 | 15 | 62 | 19 | 79 | 68 | >600 |

* Amount per 100 parts by mass of PVA

As shown in Table 1, by changing at least one of the type of the PVA, the type of the plasticizer, the amount of the plasticizer added, the surface temperature of the support (metal roll), the value of (S1/S0), and the presence or absence of additional heat treatment, it was confirmed that the thermophysical properties of the water-soluble film containing the $Tm_1$ and the $Tm_2$ could be adjusted.

Further, the water-soluble films of each Examples having the $Tm_1$ of 105°C or more and 165°C or less and the $Tm_2$-$Tm_1$ of 20°C or more were excellent in both high-speed heat-sealing property and water solubility. On the other hand, the water-soluble films of each comparative example that did not satisfy the above conditions were inferior in high-speed heat-sealing property.

## EXPLANATION OF REFERENCE NUMERAL

1:     Baseline
2:     The area surrounded by the melting curve and the baseline
3:     Melting temperature (Tm)

## Claims

1. A water-soluble film containing a polyvinyl alcohol resin, wherein after conditioning the water-soluble film at a temperature of 20°C and a relative humidity of 60% for 24 hours, a first melting temperature $Tm_1$ obtained from a melting curve when the temperature of the water-soluble film is raised to 200°C at 500°C/sec and a second melting temperature $Tm_2$ obtained from a melting curve when the temperature of the water-soluble film is cooled to 0°C at 100°C/sec after a temperature rise and the temperature of the water-soluble film is again raised to 200°C at 100°C/sec satisfy relationships of the following formulas (1) and (2).

$$105°C \leq Tm_1 \leq 165°C...(1)$$

$$Tm_2 - Tm_1 \geq 20°C...(2)$$

2. The water-soluble film as claimed in claim 1, wherein the second melting temperature $Tm_2$ is 150°C or more and 180°C or less.

3. The water-soluble film as claimed in claim 1 or 2, wherein a first heat of fusion $\Delta H_1$ obtained from the melting curve at a time of $Tm_1$ measurement is 2 J/g or more and 15 J/g or less.

4. The water-soluble film as claimed in any one of claims 1 to 3, containing 10 parts by mass or more and 50 parts by mass or less of a plasticizer with respect to 100 parts by mass of the polyvinyl alcohol resin.

5. A package in which the water-soluble film described in any one of claims 1 to 4 stores a chemical.

6. The package as claimed in claim 5, wherein the chemical is a pesticide, a detergent or a germicide.

7. The package as claimed in claim 5 or 6, which is produced by heat-sealing.

FIG. 1

**INTERNATIONAL SEARCH REPORT**

| International application No. |
|---|
| PCT/JP2021/022537 |

**A. CLASSIFICATION OF SUBJECT MATTER**
B65D 65/46(2006.01)i; C08L 29/04(2006.01)i; C08J 5/18(2006.01)i
FI: C08J5/18 CEX; C08L29/04 A; B65D65/46
According to International Patent Classification (IPC) or to both national classification and IPC

**B. FIELDS SEARCHED**

Minimum documentation searched (classification system followed by classification symbols)
B65D65/46; C08L29/04; C08J5/18

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2016/190235 A1 (KURARAY CO., LTD.) 01 December 2016 (2016-12-01) claims, paragraphs [0024], [0025], [0046], [0075]-[0084], examples | 1–4<br>5–7 |
| A | JP 2017-533304 A (THE PROCTER & GAMBLE COMPANY) 09 November 2017 (2017-11-09) claims, examples, entire text | 1–7 |
| A | JP 2003-206380 A (THE NIPPON SYNTHETIC CHEMICAL INDUSTRY CO., LTD.) 22 July 2003 (2003-07-22) claims, examples, entire text | 1–7 |
| A | JP 2017-100806 A (THE NIPPON SYNTHETIC CHEMICAL INDUSTRY CO., LTD.) 08 June 2017 (2017-06-08) claims, examples, entire text | 1–7 |
| P, X | WO 2020/138437 A1 (KURARAY CO., LTD.) 02 July 2020 (2020-07-02) claims, paragraphs [0053]-[0055], [0089]-[0106], examples | 1–7 |

☒ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 August 2021 (05.08.2021) | 17 August 2021 (17.08.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2021/022537

C (Continuation).   DOCUMENTS CONSIDERED TO BE RELEVANT

| Category* | Citation of document, with indication, where appropriate, of the relevant passages | Relevant to claim No. |
|---|---|---|
| P, X | WO 2020/138438 A1 (KURARAY CO., LTD.) 02 July 2020 (2020-07-02) claims, paragraphs [0041]-[0043], [0077]-[0095], examples | 1-7 |

Form PCT/ISA/210 (continuation of second sheet) (January 2015)

INTERNATIONAL SEARCH REPORT

Information on patent family members

International application no.

PCT/JP2021/022537

| Patent Documents referred in the Report | PuBlication Date | Patent Family | PuBlication Date |
|---|---|---|---|
| WO 2016/190235 A1 | 01 Dec. 2016 | CN 107614242 A<br>KR 10-2018-0013908 A<br>TW 201708268 A | |
| JP 2017-533304 A | 09 Nov. 2017 | US 2016/0102279 A1<br>claims, examples<br>US 2019/0276782 A1<br>WO 2016/061054 A1<br>EP 3207084 A1<br>CA 2962807 A<br>CN 106795353 A<br>KR 10-2017-0054474 A | |
| JP 2003-206380 A | 22 Jul. 2003 | WO 2003/060007 A1 | |
| JP 2017-100806 A | 08 Jun. 2017 | (Family: none) | |
| WO 2020/138437 A1 | 02 Jul. 2020 | (Family: none) | |
| WO 2020/138438 A1 | 02 Jul. 2020 | WO 2020/138445 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017078166 A